# EUROPÄISCHE PATENTSCHRIFT

(11) **EP 0 520 345 B1**
(45) Veröffentlichungstag und Bekanntmachung des Hinweises auf die Patenterteilung: **30.08.1995**
(21) Anmeldenummer: 92110441.0
(22) Anmeldetag: 20.06.1992
(51) Int. Cl.: B29C 45/28

(54) **Einspritzdüse für eine Spritzgussform**
Injection nozzle for an injection mould
Buse d'injection pour un moule d'injection

(30) Priorität: 28.06.1991 IT MI911779
(43) Veröffentlichungstag der Anmeldung: 30.12.1992
(73) Patentinhaber: ACRILUX S.p.A., I-62019 Recanati (IT)
(72) Erfinder: Guzzini, Alberto, I-62019 Recanati (IT); Guzzini, Cherubino, I-62019 Recanati (IT); Guzzini, Isino, I-62019 Recanati (IT); Guzzini, Vinicio, I-62019 Recanati (IT)
(74) Vertreter: Baldi, Claudio

(56) Entgegenhaltungen:
- EP-A- 0 282 999
- AU-B- 576 327
- DE-A- 2 316 281
- DE-A- 2 615 282
- DE-A- 4 021 782
- GB-A- 2 124 968
- US-A- 4 595 552

## Beschreibung

Die vorstehende Erfindung betrifft eine Einspritzduese fuer eine Spritzgussform gemäß dem Oberbegriff des Anspruchs 1. Einspritzdüsen dieser Art werden z.B. zum Verspritzen von Kunststoffen, wie z.B. zur Herstellung hohler Koerper, wie z.B. Becher oder Schalen verwendet. Die hohlen Koerper koennen nach dem Spritzgießen einem Blasvorgang unterzogen werden, um beispielsweise Globen fuer die Fertigung von Beleuchtungskoerpern zu erzeugen.

Die bekannten Einspritzduesen bestehen aus mehreren Bauteilen mit einer Materialzufuehrleitung, die auch ein Verschlussteil aufnimmt, das stangenfoermig oder nach Art eines beweglichen Schiebers ausgebildet ist, der hin- und herbeweglich angeordnet ist, um die Einspritzoeffnung der Spritzgussform zu schliessen oder fuer den Materialfluss freizugeben.

Eine Düse dieses Typs wird in der EP-A-0282999 hinsichtlich einer Einspritzdüse beschrieben, bei der die geradlinige Zuführleitung eine Endabweichung aufweist, um sich mit der kegelstumpfförmigen Einspritzbohrung zu verbinden, die durch ein verschiebbares Nadelventil in einem koaxialen Führungsgang eingeschlossen und parallel zur Zuführleitung ist.

Die bekannten Duesen dieser Art weisen verschiedene Nachteile auf.

Das Vorhandensein beweglicher Bauteile in der Materialzufuehrleitung und die daraus folgende Notwendigkeit, diese Bauteile auch anzutreiben, bedingen es, die Materialzufuehrleitung an jenen Stellen umzuleiten, an denen die Betaetigungsvorrichtungen fuer die beweglichen Bauteile angeordnet sind. Demzufolge werden die beweglichen Bauteile im Anschluss an die Betaetigungsvorrichtungen durch den Materialfluss in einer Richtung angestroemt, die nicht mit der geometrischen Achse der beweglichen Bauteile uebereinstimmt. Diese Stroemungsaenderung ruft Geschwindigkeitsaenderungen in der Stroemung des der Spritzgussform zugefuehrten Kunststoffstromes hervor, was zu einem asymmetrischen Geschwindigkeitsdiagramm in Querrichtung der Stroemung fuehrt. Daraus folgt, dass der der Spritzgussform zugefuehrte Materialstrom gegenueber der Laengsachse der Zufuehrleitung nicht zentriert ist. Dies fuehrt zu einem asymmetrischen und unregelmaessigen Materialfluss in die Spritzgussform, was Fehler im zu pressenden Bauteil, z.B. unterschiedliche Verarbeitungstemperatur, Dickenunterschiede, Materialspannungen, sowie Bildung von sichtbaren Stroemungslinien und Schlieren im Inneren des Spritzgussteiles hervorruft. Die Vorsehung von beweglichen Bauteilen in der Materialzufuehrleitung foerdert des weiteren den Stau von Materialteilchen im Inneren der Leitung. Dies fuehrt dazu, dass bei Aenderung der Farbe des zu verspritzenden Kunststoffes Partikel des vorher verarbeiteten Kunststoffes in der Materialzufuehrleitung verbleiben und sich bei Verarbeitung neuer Materialien mit anderer Einfaerbung farblich unterschiedliche Ablagerungen und Fleckenbildungen in den fertigen Spritzgussteilen bilden.

Zur Beseitigung der vorgenannten Nachteile sind bereits Düsenarten mit zwei verschiedenen Leitungen vorgeschlagen worden: eine für das Einspritzen des Spritzgußmaterials, die andere für die Aufnahme und geführte Bewegung eines Absperrstabs der Einspritzleitung selbst.

Bei diesen Düsenarten verläuft die Einspritzleitung im allgemeinen der Düsenlängsachse entlang, während die Leitung, in der das Absperrglied aufgenommen ist, durch von Modell zu Modell unterschiedliche Neigung die Einspritzleitung blockiert. Eine Düse dieser Art wird in DE-A-4021782 beschrieben.

Auch wenn diese Düsenmodelle das oben erwähnte Problem hinsichtlich des Absperrglieds im Inneren der Einspritzleitung gelöst haben, weisen sie jedoch einen beachtlichen Nachteil auf.

Sie verwenden nämlich Absperrglieder, die in allen Fällen den Materialfluß an einem mittleren Abschnitt oder am Endabfluß der Einspritzleitung unterbrechen.

Diese Lösung verursacht nun die Bildung von Restmaterial an der Unterseite des abgesperrten Abschnitts der Leitung entlang oder innerhalb Einspritzöffnung selbst, die sich direkt an der Spritzgußform befindet; diese Reste können die Qualität des zu spritzgießenden Bauteils beeinträchtigen, da sie - je nach Überschneidungspunkt von Einspritzleitung und Absperrglied - an dem gerade gefertigten Teil in Form von Angüssen hängenbleiben oder die Regelmäßigkeit der Oberfläche des anschliessend zu spritzgießenden Bauteils beeinträchtigen.

Die bekannten Einspritzduesen, die aus mehreren Bauteilen bestehen, sind in ihrem Aufbau sehr komplex und erlauben es fast nie, mit einfachen Mitteln eine gleichmaessige Temperaturverteilung ueber die gesamte Laenge der Materialzufuehrleitungen zu erreichen.

Aufgabe der vorstehenden Erfindung ist es, eine Einspritzduese fuer eine Spritzgussform zu schaffen, die sehr einfachen Aufbau und kompakte Bauform hat und aus einer beschraenkten Anzahl von Bauteilen besteht und die eine gleichmäßige Materialströmung ermöglicht und ferner keine Ablagerung von Partikeln in der Zufuehrleitung zulaesst, um Spritzgussteile zu erzeugen, die einen einwandfreien technischen Aufbau haben und gleichmaessige Wanddicke und keine Oberflaechenfehler aufweisen.

Diese Aufgabe wird erfindungsgemäß durch eine Einspritzdüse nach Patentanspruch 1 gelöst.

Zweckmäßige Weiterbildungen der Erfindung ergeben sich aus den abhängigen Ansprüchen 2 bis 5.

Eine Spritzgussduese dieser Art mit einer Zufuehrleitung und einem Verschlussteil zum Absperren der Einspritzoeffnung kennzeichnet sich dadurch, dass die Materialzufuehrleitung sich ohne Vorsehung von eingesetzten Bauteilen geradlinig vom Beginn der Materialzufuehrleitung bis zur Einspritzoeffnung in die Spritzgussform erstreckt, dass ein Absperrteil in einer eigenen Aufnahmebohrung angeordnet ist und diese Bohrung die Materialzufuehrleitung an deren Unterseite schneidet und dass das Absperrteil aus einer Lage, in der die Einspritzoeffnung der Zufuehrleitung abgesperrt ist, in eine Lage verschiebbar ist, in der das Absperrteil die Zufuehrleitung freigibt.

Es wird eine einfache, kompakte und mit niedrigen Kosten herstellbar Bauform auf automatischen Werkzeugmaschinen dadurch herstellbar, dass der Koerper der Einspritzduese einstueckig ausgebildet ist.

Es wird eine gleichmaessige Verteilung der Temperatur in Umfangsrichtung der Zufuehrleitung sowie eine einfache Ausfuehrung der Zufuehrleitung dadurch erreicht, dass die Zufuehrleitung geradlinig ausgefuehrt ist.

Der Koerper des Einspritzventils kann mit geringem Platzaufwand dadurch hergestellt werden, dass die Laengsachse der Aufnahme, die das Absperrglied aufnimmt, mit der Laengsachse der Zufuehrleitung einen spitzen Winkel von ungefaehr 20° einschliesst.

Es werden mit Sicherheit Materialablagerungen in der Zufuehrleitung vermieden und Spritzgussteile ohne einen Steiger und somit geeignet fuer das Blasen von einwandfreien Hohlkoerpern dadurch hergestellt, dass die Einspritzbohrung der Spritzgussform und das Kopfstueck des Absperrgliedes als kegelstumpfartig ausgebildete Bauteile vorgesehen sind und dass nach Durchfuehrung des Einspritzvorganges durch das Kopfstueck des Absperrgliedes ein Verschliessen der Einlassoeffnung in die Spritzgussform erfolgt.

Die Herstellung der Einspritzduese sowie die Anzahl der notwendigen Bauteile werden vermindert, und es wird eine praezise Verschiebebewegung des Absperrteiles dadurch erzielt, dass das Absperrglied mit einem Kolben verbunden ist, der in einem Zylinder angeordnet ist, der in den Koerper der Einspritzduese eingearbeitet ist.

Es wird eine Drehbewegung des Absperrgliedes in einfacher Weise dadurch vermieden, dass in eine Axialnut des Absperrgliedes das Endstueck einer Schraube eindringt, die im Koerper der Einspritzduese befestigt ist.

Eine einfache Einrichtung zum Aufheizen der Wandung mit einheitlicher Temperatur laengs der Materialzufuehrleitung ist dadurch erzielbar, dass im Ventilkoerper und um die Materialzufuehrleitung, stabfoermige Heizsonden vorgesehen und die elektrischen Leitungen der Heizsonden in radial verlaufenden Nuten des Ventilkoerpers angeordnet sind.

In vorteilhafter Weise bestehen die Heizsonden aus elektrischen Widerstaenden. Es koennen auch Sonden vorgesehen sein, die eine Heizfluessigkeit oder eine Kuehlflussigkeit aufnehmen. Das erfindungsgemaesse Einspritzventil erlaubt auch alternativ den Anschluss einer Heizvorrichtung oder einer Kuehleinrichtung, die mit einer Fluessigkeit beaufschlagt wird. Die Anordnung der stangenartig ausgebildeten Sonden zum Heizen oder Kuehlen des Einspritzventiles kann ohne eine Vergroesserung des Platzbedarfes fuer das Einspritzventil erfolgen.

Die mit der Erfindung erzielbaren Vorteile bestehen darin, dass das zu verspritzende Material der Spritzgussform mit gleichmaessiger Geschwindigkeit ueber den gesamten Stroemungsquerschnitt der Einspritzoeffnung zufuehrbar ist, dass Wirbelbildung im Materialstrom sowie unerwuenschte Umlenkungen des Materialstromes beim Einlauf in die Spritzgussform vermieden werden. Das zu verspritzende Material fuellt den Hohlraum der Spritzgussform mit anfangs radial verlaufender Stroemung, die genau zentriert gegenueber der Einspritzbohrung erfolgt. Es koennen somit Dickenunterschiede in den Wandungen der Spritzgussteile sowie Schlierenbildung oder ein Abzeichnen unterschiedlicher Materialstroemungen im Spritzgussteil vermieden werden. Die somit hergestellten Spritzgussteile sind frei von verschiedenartigen oder andersfarbigen Materialteilen, die von vorangegangenen Spritzvorgaengen herruehren, die mit der erfindungsgemaessen Vorrichtung erstellten Spritzgussteile koennen in optimaler Weise zur Weiterverarbeitung, z.B. fuer die Herstellung von hohlen Bauteilen, wie Lichtgloben fuer Beleuchtungsgeraete, verwendet werden.

Ein Ausfuehrungsbeispiel der erfindungsgemaessen Einspritzdüse ist in den Zeichnungen dargestellt und wird im Anschluss genauer beschrieben.

Es zeigen:

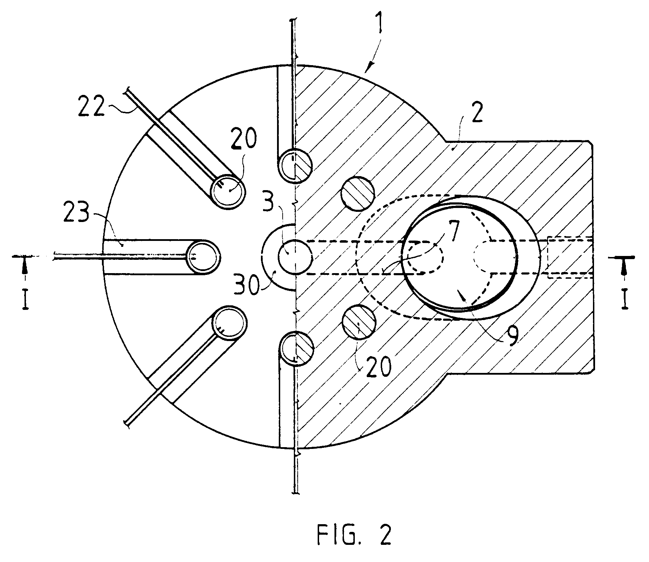

Fig. 1 einen Laengsschnitt entlang der Linie I-I der Fig. 2;
Fig. 2 eine Ansicht von oben, zur Haelfte im Schnitt entlang der Linie II-II der Fig. 1.

Das Einspritzventil 1 besteht aus einem Koerper 2, der eine Materialzufuehrleitung 3 aufnimmt. Ferner ist ein stabartig ausgebildetes Verschlussteil 4 vorgesehen. Mit 5 ist die Einlassbohrung der Spritzgussform 6 dargestellt.

Erfindungsgemaess ist der Ventilkoerper 2 einstueckig ausgebildet und die Materialzufuehrleitung 3 ist frei von Einsaetzen. Die Zufuehrleitung 3 erstreckt sich von der Materialeinfuelloeffnung 30 zur Einspritzbohrung 31 und ist mit glatten Wandungen, z.B. geschliffenen Wandungen, ausgestattet. Die Leitung 3 ist geradlinig ausgefuehrt. Im dargestellten Beispiel ist die Leitung 3 entlang der Mittelachse des Ventilkoerpers 2 angeordnet.

Das stabartig ausgebildete Verschlussgteil 4 ist hin- und herbeweglich in einer Ausnehmung, z.B. in einer Bohrung 7, gelagert. Die Laengsachse der Bohrung 7 schliesst mit der Laengsachse der Zufuehrleitung 3 einen spitzen Winkel, z.B. von ungefaehr 20°, ein. Die Bohrung 7 ist schraeg gegenueber der Zufuehrleitung 5 angeordnet und schneidet die Zufuehrleitung 3 in Uebereinstimmung mit der Einspritzoeffnung 31,5.

Im dargestellten Beispiel weist das Endstueck 8 des Verschlussteiles sowie die Einspritzoeffnung 5 der Spritzgussform 6 Kegelstumpfform auf. Das Verschlussteil 4 ist stabartig ausgebildet und mit einem Betaetigungskolben 19 verbunden, der in einem Zylinder 9 angeordnet ist.

Der Zylinder 9 kann hydraulisch oder pneumatisch nach Art eines doppeltwirkenden Zylinders angetrieben werden. Der Zylinder 9 ist in den Ventilkoerper 2 eingearbeitet und an seiner Oberseite durch einen Deckel 10 mittels Schrauben 11 verschlossen. Die Zufuehrleitungen fuer das Druckmittel sind mit 12 und 13 gekennzeichnet.

Das Absperrglied 4 weist eine Laengsnut 15 auf, in die das Ende 16 einer Schraube 17 eintritt, um somit eine Drehbewegung des Absperrgliedes zu vermeiden. Die Schraube 17 ist im Ventilkoerper 2 befestigt und die Laenge der Nut 15 ist groesser gewaehlt als der Hub des hin- und herbeweglichen Verschlussteiles 4. Bei zurueckgezogenem Kolben 19, wie dies mit gestrichelten Linien dargestellt ist, ist das Kopfstueck 8 des Verschlussteiles 4 aus der Zufuehrleitung 3 ausgetreten. Bei vollstaendig vorgeschobener Stellung des Kolbens 19, wie dies mit durchgehenden Linien dargestellt ist, schliesst das Kopfstueck 8 die Einlassoeffnung 5 der Spritzgussform ab und verschliesst auch die Materialzufuehrleitung 3.

Wie den Zeichnungen zu entnehmen ist, weist die Vorrichtung auch eine Heizeinrichtung, bestehend aus elektrischen Widerstaenden 20, auf. Die Heizsonden 20 sind in Bohrungen 21 eingesetzt, die parallel um die Materialzufuehrleitung 3 angeordnet sind.

Die Widerstaende 20 sind konzentrisch um die Materialzufuehrleitung 3 angeordnet. Die elektrischen Leitungen 22 zum Betreiben der Heizwiderstaende sind in radial verlaufenden Nuten 23 eingesetzt. Im Ventilkoerper 2 kann auch eine Einrichtung (nicht dargestellt) zum Zuleiten einer thermisch wirkenden Fluessigkeit vorgesehen sein. Diese Einrichtung kann aehnlich der Heizvorrichtung ausgebildet werden. In diesem Fall sind die elektrischen Sonden oder Widerstaende 20 durch stabartige Bauteile zu ersetzen, die mit steuerbaren Ventilen fuer den Umlauf der thermisch wirksamen Fluessigkeit geeignet sind. Die stabartigen Einsaetze 20 sind mit Leitungen zu verbinden, die mit einer Einrichtung zum Zufuehren und Abfoerdern eines thermischen Fluids wirkverbunden sind.

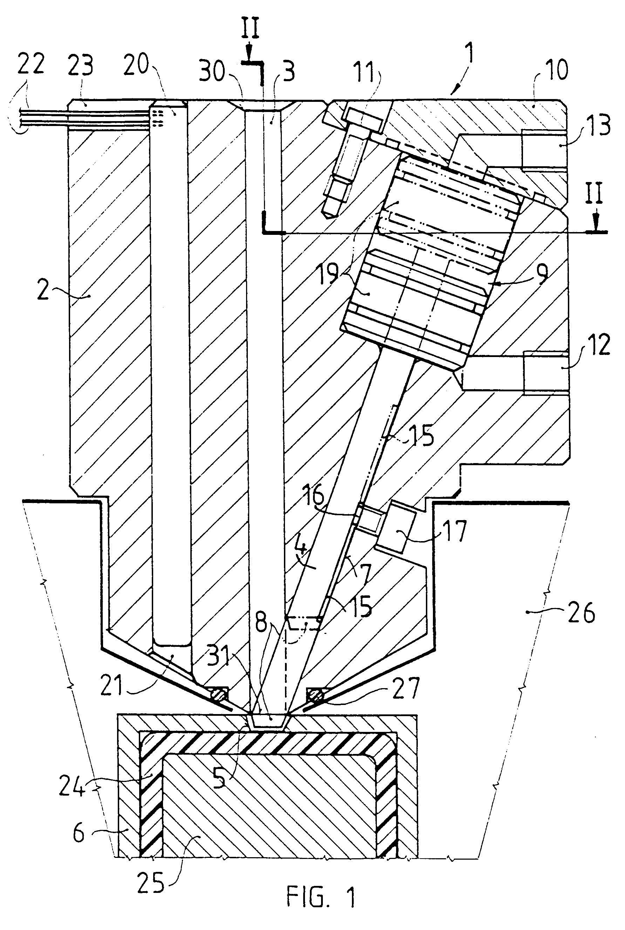

In Fig. 1 ist im Hohlraum zwischen Spritzgussform 6 und Gegenform 25 ein fertiges hohles Spritzgussteil 24 dargestellt. Die Spritzgussform ist in einer Halterung 26 austauschbar angeordnet. Mit dem Bezugszeichen 27 ist ein Dichtungsring angedeutet.

Die Funktionsweise des erfindungsgemaessen Einspritzventiles ist folgende:
Waehrend des Einspritzvorganges befindet sich das Kopfstueck 8 des Verschlussteiles in der Bohrung 7 in einer mit gestrichtelten Linien dargestellten Stellung, d.h. das Absperrglied ist vollstaendig aus der Materialzufuehrleitung 3 ausgefahren. Das zu verspritzende Material durchfliesst ungehindert die Leitung 3, ohne auf Hindernisse zu stossen, was zur Folge hat, dass der Materialfluss mit gleichmaessiger Geschwindigkeit ueber den gesamten Stroemungsquerschnitt ueber die Einlaufbohrung 5 in den Hohlraum der Spritzgussform einfliesst. Das zu verspritzende Material kann sich daher gleichmaessig und konzentrisch im Hohlraum der Spritzgussform verteilen, indem es zuerst gleichmaessig den Bodenbereich ueberfliesst und anschliessend in die Wandteile der Spritzgussform einfliesst. Nach erfolgtem Einspritzvorgang wird der Kolben 19 betaetigt, wodurch das Absperrglied 4 auf die Einspritzoeffnung 31 zu bewegt wird. Waehrend seiner Vorschubbewegung verdraengt das Kopfstueck 8 des Absperrteiles 4 das ueber die Oeffnung 7 zugefuehrte Material und drueckt dies in die Zufuehrleitung 3 zurueck, worauf sich das zu verspritzende Material anschliessend im unteren Teil der Zufuehrleitung 3 und der Bohrung 5 befindet. In seiner Endlage schliesst das Kopfstueck 8 des Verschlussgliedes 4 die Bohrung 5. Waehrend der Durchfuehrung der hin- und hergehenden Bewegung arbeitet das Kopfstueck 8 gleichzeitig als Schaber mit der Schnittkante zwischen Zufuehrleitung 3 und Bohrung 7 zusammen. Man vermeidet somit die unerwuenschte Ablagerung von Restmaterial im unteren Teil der Zufuehrleitung 3 sowie der Bohrung 5. Die Gleichmaessigkeit im Materialfluss wird dadurch gewaehrleistet, dass die Zuflussleitung 3 geradlinig ausgebildet ist und glatte Waende aufweist, ohne die Notwendigkeit, in die Leitung 3 Einsaetze oder den Materialstrom stoerende Bauteile vorzusehen. Dadurch wird ein Aufspalten oder ein Umlenken des Materialflusses entlang der Zuflussleitung 3 mit Sicherheit vermieden. Der gleichmaessige Materialfluss wird auch in der Einspritzbohrung sowie im Hohlteil der Spritzgussform aufrechterhalten.

Die vorgeschlagene Einspritzduese ist fuer Spritzgussvorgaenge von Kunststoffmaterialien sowie von verspritzbaren Materialien geeignet. Der Zylinder 9 zum Antreiben des Absperrgliedes kann ohne weiteres auch durch Kurven, Scheiben, schiefe Ebenen, Kabelzuege zur Uebertragung einer Zug- oder Druckkraft oder andere Betaetigungsmittel ersetzt werden. Die Lagerung der Antriebsgeraete des Absperrgliedes kann auf jeden Fall problemlos geloest werden, da der Kraftangriffspunkt zum Betaetigen des Verschlussgliedes ausserhalb der Materialzufuehrleitung vorgesehen ist.

## Patentansprüche

1. Einspritzdüse für eine Spritzgußform mit einer geradlinigen Zufuhrleitung (3), die mit einer Endöffnung (31) endet und einem stabförmigen Absperrglied (4), das in einer Bohrung (7), die die vorgenannte Zuführleitung (3) an deren Unterseite schneidet, angeordnet und verschiebbar ist, dadurch gekennzeichnet, daß das in Übereinstimmung mit der Einspritzbohrung (5) der Spritzgußform (6) kegelstumpfförmig ausgebildete Kopfstück (8) des Absperrglieds (4) auf einer Längsachse liegt, die gegenüber der Achse der eigenen Verschiebebohrung (7) außerachsig und gegenüber der Achse der Zuführungsleitung (3) parallel angeordnet ist und aus deren Endöffnung (31) bei Endanschlag das betreffende kegelstumpfförmige Kopfstück (8) herausragt, welches sich bei Endanschlag in die Einspritzbohrung (5) der Spritzgußform (6) einfügt und diese Einspritzbohrung (5) verschließt.

2. Einspritzdüse, nach Patentanspruch 1, dadurch gekennzeichnet, dass die Laengsachse der Bohrung (7) zur Aufnahme des Absperrgliedes (4) und die Laengsachse der Materialzufuehrleitung (3) einen Winkel von ungefahr 20° einschliessen.

3. Einspritzdüse, nach Patentanspruch 1, dadurch gekennzeichnet, dass das Absperrglied (4) mit einem Antriebskolben (19) verbunden ist, der beweglich in einem Zylinder (9) gelagert ist und dass der Zylinder (9) in den Ventilkoerper (2) eingearbeitet ist.

4. Einspritzdüse, nach Patentspruch 1, dadurch gekennzeichnet, dass in einer Laengsnut (15) des Absperrgliedes (4) das Ende (16) einer Schraube (17) eindringt und die Schraube im Ventilkoerper (2) befestigt ist.

5. Einspritzdüse, nach Patentanspruch 1, dadurch gekennzeichnet, dass der Ventilkoerper (2) um die Materialzufuehrleitung (3) stabartige Sonden (20) zur thermischen Beeinflussung der Leitung (3) aufnimmt und die Leitungen (22) zum Anschluss der Sonden (20) in radial verlaufenden Nuten (23) angeordnet sind.

## Claims

1. A mould injection nozzle consisting of a rectilinear feed pipe (3) terminating with a hole (31) and a pin valve (4) housed and sliding within a hole (7) intersecting the feed pipe (3) at the bottom, characterised in that the head (8) of the valve (4) having a truncated cone profile conforming to that of the injection hole (5) of the mould (6), in which the feed pipe (3) opens, rests on a longitudinal axis being out of alignment with respect to that of its sliding hole (7) and parallel to that of the feed pipe (3), from whose terminal hole (31) said truncated cone head (8) projects at the end of the stroke, and which fits, again at the end of the stroke, into the injection hole (5) of the mould (6) thereby closing said injection hole (5).

2. A nozzle according to claim 1, characterised in that the longitudinal axis of the hole (7) housing the valve (4) and the longitudinal axis of the feed pipe (3) form an angle of approximately 20°.

3. A nozzle according to claim 1, characterised in that the valve (4) is connected to a movable piston (19) in a cylinder (9) and that said cylinder (9) is realised from the body (2) of the nozzle.

4. A nozzle according to claim 1, characterised in that the end (16) of a screw (17) fitted in the body (2) of the nozzle penetrates into an axial groove (15) of the valve (4).

5. A nozzle according to claim 1, characterised in that thermal conditioning rod shaped devices (20) are housed in the nozzle body (2) and around the feed pipe (3) while the connection lines (22) of the thermal conditioning bodies (20) are fitted in radial grooves (23).

## Revendications

1. Buse d'injection pour un moule, du type avec conduit d'alimentation (3) rectiligne, qui se termine avec un orifice (31), et un obturateur à pointeau (4) introduit et glissant dans un orifice (7), qui intercepte dans la partie inférieure le conduit d'alimentation (3) ci-dessus, caractérisée en ce que l'about (8) de l'obturateur (4), avec un profile troncoconique conforme à l'orifice d'injection (5) du moule (6) dans lequel aboutit le conduit d'alimentation (3), se trouve sur un axe longitudinal qui résulte désaxé par rapport à celui de l'orifice de glissement (7) mais par contre parallèle à celui du conduit d'alimentation (3), d'où sort de l'orifice terminal (31), à la fin de la course, cet about troncoconique (8), lequel s'implante, toujours à la fin de course, dans l'orifice d'injection (5) du moule (6) et ferme cette orifice d'injection (5).

2. Buse selon la revendication 1, caractérisée en ce que l'axe longitudinal de l'orifice (7) qui loge l'obturateur (4) et l'axe longitudinal du conduit (3) d'alimentation forment un angle de 20° approximativement.

3. Buse selon la revendication 1, caractérisée en ce que l'obturateur (4) est relié à un piston (19) mobile dans un cylindre (9), et que le cylindre (9) se trouve dans le corps (2) de la buse.

4. Buse selon la revendication 1, caractérisée en ce que dans une gorge (15) axiale de l'obturateur (4) pénètre l'extrémité (16) d'une vis (17) vissée dans le corps (2) de la buse.

5. Buse selon la revendication 1, caractérisée en ce que dans le corps (2) de la buse et autour du conduit (3) d'alimentation se trouvent des tiges (20) pour le conditionnement thermique et que les lignes (22) de connexion des corps (20) du conditionnement thermique sont disposées en rainures radiales (23).
